# FASCICULE DE BREVET EUROPEEN

(11) **EP 1 792 243 B1**
(45) Date de publication et mention de la délivrance du brevet: **12.12.2007**
(21) Numéro de dépôt: 05798956.8
(22) Date de dépôt: 06.09.2005
(51) Int. Cl.: G05D 1/02

(54) **PROCEDE DE DETERMINATION EN TEMPS REEL DE LA TRAJECTOIRE CIBLE D'UN VEHICULE**
VERFAHREN ZUR ECHT-ZEIT-BESTIMMUNG DER ZIELBAHN EINES KRAFTFAHRZEUGES
METHOD FOR REAL-TIME DETERMINATION OF THE TARGET TRAJECTORY OF A MOTOR VEHICLE

(30) Priorité: 07.09.2004 FR 0451973
(43) Date de publication de la demande: 06.06.2007
(73) Titulaire: RENAULT TRUCKS, 69800 St Priest (FR)
(72) Inventeur: LEGER, Hugues, F-69006 LYON (FR); DECHAMP, François, F-71250 CLUNY (FR)
(74) Mandataire: Putet, Gilles
(86) Numéro de dépôt international: PCT/FR2005/050714
(87) Numéro de publication internationale: WO 2006/027533

(56) Documents cités:
- EP-A- 0 448 060
- EP-A- 1 170 651
- US-A- 5 390 118

## Description

### Domaine technique

L'invention se rattache au domaine des systèmes de calcul de trajectoire cible équipant les véhicules automobiles, et notamment mais non exclusivement, les véhicules industriels tels que les camions.

L'invention vise plus spécifiquement un procédé qui permet de déterminer une trajectoire optimisée par rapport à la voie de circulation, vis à vis de différents critères, parmi lesquels on peut citer la limitation des accélérations latérales, ou recherche du plus court chemin.

La trajectoire ainsi définie peut être utilisée comme consigne par divers dispositifs assurant la commande de direction. Elle trouve donc une application particulière dans les véhicules dans lesquels le braquage des roues n'est pas obtenu par une transmission mécanique, mais par le biais d'un ou plusieurs dispositifs mettant en oeuvre des circuits hydrauliques, électro-hydrauliques ou électriques. Ce type de direction est connue sous l'appellation "steer by wire".

### Techniques antérieures

De façon générale, les systèmes existants de suivi de trajectoire prennent en compte une trajectoire cible qui est déterminée par des repères liés à la chaussée. Ces repères peuvent être spécifiques à cette fonction, comme décrit dans le document US 5 390 118, ou bien encore être constitués par les lignes de marquage au sol, comme dans le document US 6 292 752. Ces systèmes dits de "lane-keeping" permettent au véhicule d'adopter une trajectoire prédéterminée et sans degré de liberté, qui est directement liée à la courbure de la voie de circulation qui est parcourue.

On conçoit que la trajectoire suivie reproduit donc fidèlement les différentes variations de courbure de la chaussée. Cela peut se traduire par une multiplication des accélérations transversales qui sont inconfortables pour le conducteur. Ces accélérations sont également la source de contraintes mécaniques sur le châssis du véhicule qui sont d'autant plus préjudiciables que le véhicule présente une masse élevée. A l'extrême, une accélération transversale trop importante peut provoquer le renversement du véhicule. Les documents EP-A-0448060 et US-A-5390118 décrivent des systèmes de commande de la trajectoire qui peuvent décaler la trajectoire par rapport à la position médiane de la chaussée, en vue de réduire de telles accélérations latérales.

Par ailleurs, la logique selon laquelle le véhicule suit fidèlement la voie de circulation, en alignant le centre du véhicule sur le centre de la chaussée se traduit inévitablement par un chemin parcouru qui est plus important. En effet, dans la mesure où les véhicules n'occupent pas la largeur totale de la voie de circulation, il existe plusieurs trajectoires possibles pour le véhicule, tout en restant intégralement à l'intérieur de la voie de circulation. Certaines de ces trajectoires sont de moindre longueur que celle suivant le centre de la voie et l'on conçoit donc qu'il est possible de réduire le chemin parcouru par un véhicule, par rapport à la trajectoire médiane de la voie de circulation, en tenant compte des caractéristiques du véhicule et notamment son empattement et sa largeur.

Un des objectifs de l'invention est de rechercher à optimiser la trajectoire vis à vis de critères tels que l'amplitude des accélérations transversales, ou le chemin parcouru, en tirant profit du degré de liberté conféré par la différence de largeur entre la voie et le véhicule.

### Exposé de l'invention

L'invention concerne un procédé de détermination de la trajectoire cible d'un véhicule automobile se déplaçant sur une voie de circulation présentant une largeur supérieure à la largeur du véhicule.

Conformément à l'invention, ce procédé combine les opérations suivantes pendant lesquelles:
- on évalue de façon continue la courbure de la voie de circulation, en au moins un point situé en avant du véhicule.
- en chaque point, on détermine une évolution d'un écart élémentaire entre la trajectoire cible et le centre de la voie de circulation, en fonction de la courbure au point considéré ;
- on somme les évolutions des écarts élémentaires pour déterminer la trajectoire cible globale.

Autrement dit, l'invention consiste à élaborer une trajectoire optimisée en temps réel en prenant en compte l'évolution de la courbure de la chaussée, et en l'anticipant, au fur et à mesure de l'avancée du véhicule. Il importe donc de connaître à tout moment l'évolution de la courbure de la voie entre le point où se situe le véhicule et un point situé en avant du véhicule. L'éloignement de ce point peut être fonction de la vitesse du véhicule, et limité par la visibilité par exemple.

A partir de cette information d'évolution de courbure, on décompose la courbure globale de la voie en une pluralité de tronçons élémentaires formant des virages élémentaires de courbure constante donnée. Un virage élémentaire pourra être de courbure nulle, auquel cas il s'agira d'un segment droit.

On élabore pour chacun des virages élémentaires une évolution d'écart relatif par rapport au centre de la voie élémentaire, en cherchant à limiter le paramètre critique qui peut être par exemple et comme déjà dit, l'amplitude de l'accélération transversale. Cela revient à assimiler ce point à un virage élémentaire de courbure donnée, dans lequel on va optimiser le placement latéral du véhicule par rapport à la voie pour passer ce virage élémentaire dans les conditions recherchées. Ainsi, à chaque virage élémentaire, on associe donc un profil élémentaire de passage de ce virage, qui correspond à l'évolution du positionnement latéral relatif du véhicule sur sa voie. Ce profil peut dépendre de l'importance de la courbure et de son signe.

La trajectoire globale est obtenue en combinant, c'est à dire en sommant ou en intégrant, l'ensemble des évolutions d'écarts relatifs élémentaires le long de la voie. Le résultat du calcul donne donc un positionnement relatif du véhicule entre les bords gauche et droite de la voie, et ceci le long d'une abscisse curviligne.

En pratique, l'écart élémentaire déterminé pour chaque tronçon peut résulter de divers profils. Ainsi, par exemple, il est possible d'utiliser un profil décomposant l'écart élémentaire en trois phases. Plus précisément, en un point donné de la voie de circulation qui présente une courbure orientée d'un coté de la voie, la trajectoire se situe successivement, par rapport au centre de la voie de circulation:
- dans une phase antérieure au passage du point considéré, du coté opposé au sens de la courbure, c'est à dire à l'extérieur du virage ;
- dans une phase centrée sur le passage du même point, du coté de la courbure, c'est à dire à l'intérieur du virage ;
- dans une phase postérieure au passage du même point, du coté opposé au sens de la courbure, c'est à dire à l'extérieur du virage.

Autrement dit, ce profil particulier consiste à traiter un virage en trois étapes qui s'enchaînent. Dans la première étape, correspondant à l'approche du virage, la trajectoire choisie consiste à se placer à l'extérieur du virage, c'est à dire à s'éloigner du centre de courbure du virage. Dans la seconde étape, correspondant au passage du virage proprement dit, la trajectoire se rapproche de la corde du virage et donc du centre de courbure. En quelque sorte, la trajectoire choisie consiste en quelque sorte à "couper" le virage. Enfin, en sortie de ce virage élémentaire, on laisse le véhicule s'écarter vers l'extérieur du virage, notamment pour atténuer l'accélération transversale.

Bien entendu, ce profil correspond à un cas particulier, donnant un résultat s'apparentant à la manière dont un pilote de rallye automobile anticipe les virages. Mais il est clair que d'autres profils, c'est à dire d'autres manières de déporter le véhicule par rapport au centre de la voie dans un virage élémentaire, peuvent être utilisées en fonction du critère que l'on cherche à optimiser.

En pratique, l'évaluation de la courbure de la voie de circulation peut être obtenue de différentes manières. Ainsi, il est possible de connaître cette courbure globale par l'analyse d'une image du champ de vision d'une ou plusieurs caméras orientées vers l'avant du véhicule. Il est ainsi possible de déterminer la courbure du secteur se présentant devant le véhicule, en détectant les contours de la voie de circulation, et notamment les lignes de marquage au sol lorsqu'elles existent.

Mais il est également possible d'évaluer la courbure de la voie de circulation par un calcul sur des données cartographiques relatives à la voie de circulation. Ces données peuvent provenir d'un système de cartographie embarqué, ou transmis à distance.

On peut également prévoir que l'évaluation de la courbure de la voie de circulation est effectuée par l'analyse ou l'interaction avec des repères liés à la voie de circulation, et notamment des repères tels que des balises ou autres appareils répartis le long de la chaussée et émettant des informations représentatives de la courbure courante. Le procédé fonctionne ainsi grâce à l'échange d'informations avec des dispositifs appartenant à l'infrastructure routière.

### Description sommaire des figures

La manière de réaliser l'invention ainsi que les avantages qui en découlent ressortiront bien de la description du mode de réalisation qui suit, à l'appui des figures annexées dans lesquelles:
- la figure 1 est une représentation d'une chaussée sur laquelle se déplace un véhicule ;
- la figure 2 est un diagramme illustrant l'évolution de la courbure de la chaussée de la figure 1, découpée en une suite de virages élémentaires de courbure constante ;
- la figure 3 est un digramme illustrant un exemple de profil de passage d'un virage élémentaire, c'est-à-dire l'évolution élémentaire de l'écart par rapport au centre de la voie de circulation, pour un virage élémentaire de référence ;
- la figure 4 est un diagramme illustrant l'élaboration de la trajectoire globale par application du profil de passage à chaque virage élémentaire composant la courbe;
- la figure 5 est un diagramme illustrant l'évolution de l'écart par rapport au centre de la voie de circulation, pour la trajectoire cible globale.

### Manière de réaliser l'invention

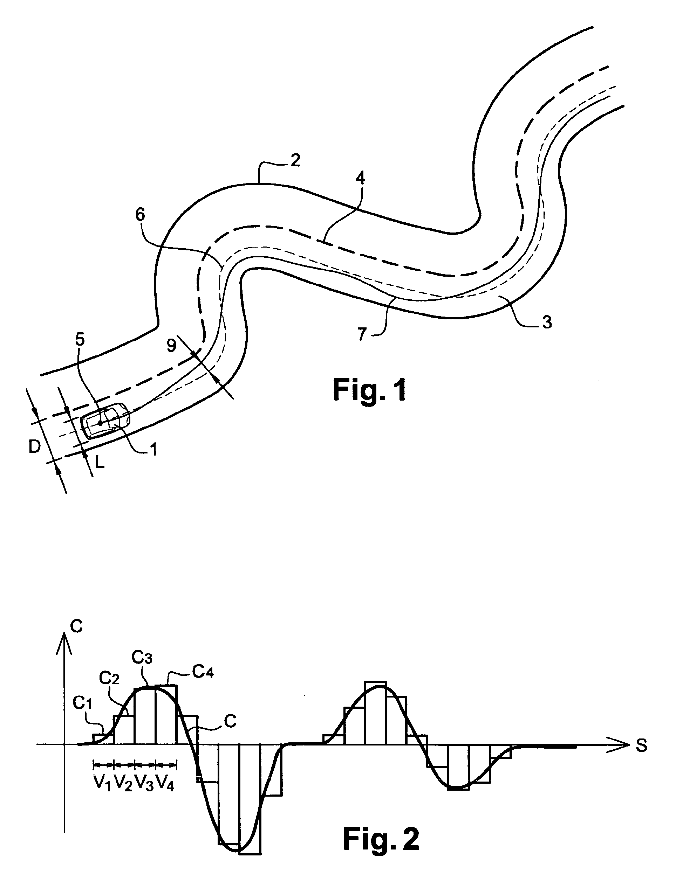

Comme illustré à la figure 1, le procédé de l'invention permet d'optimiser la trajectoire d'un véhicule (1) se déplaçant sur une chaussée (2). Plus précisément, le véhicule se déplace sur une des deux voies de circulation (3) de la chaussée, qui sont séparées par une ligne de marquage au sol (4). Le véhicule (1) présente une largeur (L) qui est inférieure à la largeur (D) de la chaussée, autorisant donc le décalage du centre (5) du véhicule par rapport à la ligne fictive (6) représentée en pointillés, pour figurer le centre de la voie de circulation (3). Ce décalage maximal est de l'ordre de ½ (D-L), et peut atteindre un mètre avec des véhicules et des chaussées classiques. Pour information, la largeur des voies est généralement d'environ 3.5m, mais on peut trouver des voies plus larges sur autoroute (4-4.5m). La largeur maximale d'un véhicule industriel routier est de l'ordre de 2.55m et d'un peu moins de 2m pour un véhicule particulier.

L'invention consiste à donner au véhicule une trajectoire optimisée, en jouant notamment sur la commande de direction, et en décalant le centre (5) du véhicule d'un écart (y) optimisé, de sorte que la trajectoire (7) du véhicule s'écarte du centre (6) de la voie. Cette trajectoire (7) est définie en fonction de l'évolution de la courbure de la voie (3). Cette courbure (C) évolue le long de la voie, comme illustré à la figure 2, qui représente la variation de cette courbure, c'est à dire l'inverse du rayon de courbure, en fonction de l'abscisse curviligne (s) mesurée le long de la ligne (6) du centre de la voie. Cette courbure est signée pour tenir compte de la position du centre de courbure par rapport à la chaussée.

Cette courbure (C) peut être évaluée de différentes manières, mais il importe qu'elle soit connue avec une certaine anticipation par rapport à la position courante du véhicule. L'évolution de cette courbure peut être obtenue de diverses manières, comme déjà évoqué, et notamment par l'analyse visuelle de repères liés à la chaussée, telles que les lignes de marquage au sol par exemple. Dans ce cas, l'anticipation est alors liée au champ de vision des appareils de capture d'images. Mais bien entendu, d'autres moyens peuvent être employés pour acquérir l'information relative à la courbure de la chaussée, sans sortir du cadre de l'invention.

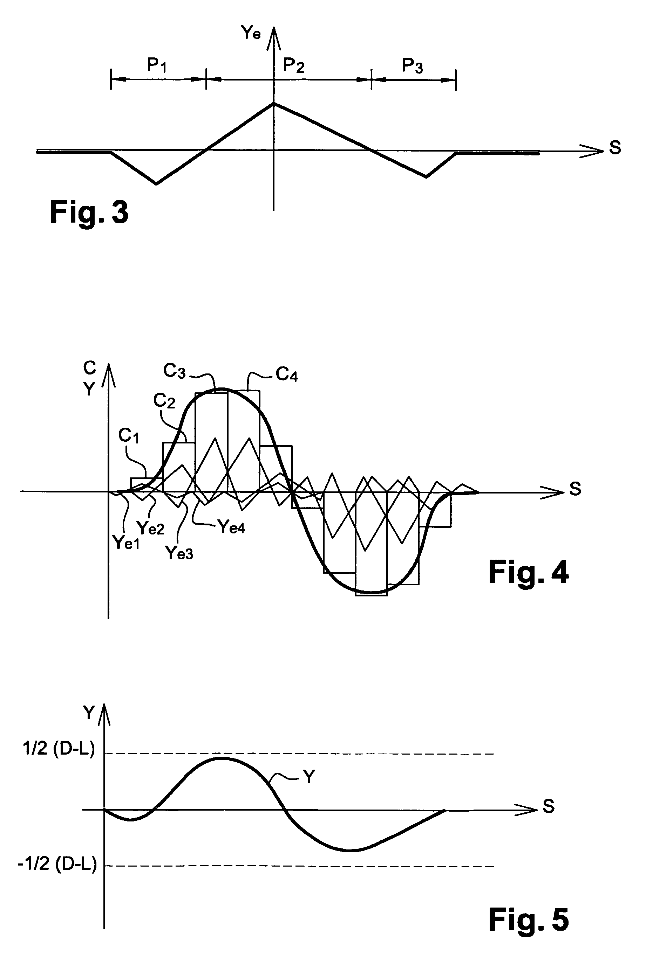

Dès lors que cette courbure est disponible, le procédé conforme à l'invention consiste à appliquer un profil d'écart élémentaire, à une pluralité de virages élémentaires obtenus par la décomposition de la courbure selon des tronçons unitaires, chacun à de ces virages élémentaires (V₁,V₂,V₃,V₄) présentant une courbure constante (C₁,C₂,C₃,C₄), comme illustré à la figure 2 . Plus précisément, et comme illustré à la figure 3, un profil élémentaire définit une évolution de l'écart élémentaire (yₑ) par rapport au centre de la chaussée, pour un virage élémentaire de courbure constante, évaluée sur un tronçon élémentaire de la voie de circulation.

Dans l'exemple particulier de la figure 3, ce profil se décompose en trois phases. Dans une première phase (P₁), le véhicule est en amont du virage élémentaire situé à l'abscisse curviligne nulle. Pendant cette phase, l'écart (yₑ) est négatif, signifiant que le véhicule s'écarte à l'extérieur du virage. Dans la seconde phase (P₂), correspondant au passage du virage, l'écart est au contraire positif, en possédant son maximum à l'aplomb du virage. Le véhicule se décale donc du coté du centre de courbure du virage élémentaire, et se rapproche donc de la corde. Enfin, dans la troisième phase (P₃), en sortie de virage, le véhicule s'écarte à nouveau vers l'extérieur du virage. Ce profil particulier est un exemple de profil qui est destiné à limiter la courbure globale de la trajectoire, et donc de réduire les accélérations transversales. D'autres profils élémentaires peuvent être adoptés pour minimiser d'autres critères ou contraintes. Ainsi, on pourra utiliser un profil dérivé de celui décrit ci avant, afin d'optimiser la continuité du Jerk, en intégrant une courbe clothoïde, tel que utilisé sur les véhicules ferroviaires guidés par leur infrastructure de roulage.

Ce profil élémentaire est appliqué à chaque virage élémentaire résultant de la décomposition en tronçons élémentaires, tel qu'illustré à la figure 4, pour donner les écarts élémentaires (yₑ₁ yₑ₂ ,yₑ₃ ,yₑ₄). Pour des questions de lisibilité, les virages élémentaires s'étendent sur des plages d'abscisse curviligne relativement larges, mais il va sans dire que le découpage peut être extrêmement fin. On note que les écarts élémentaires sont sensiblement proportionnels à la courbure du virage élémentaire. Ces écarts élémentaires (yₑ₁, yₑ₂ ,yₑ₃ ,yₑ₄) sont continûment sommés, pour donner l'écart global illustré à la figure 5. Cet écart global reste limité aux valeurs extrêmes définies par l'obligation pour le véhicule de rester à l'intérieur de sa voie de circulation. La trajectoire globale ainsi définie peut être exploitée par le dispositif de commande de la direction.

Il ressort de ce qui précède que la trajectoire du véhicule définie en appliquant le procédé de l'invention peut être optimisée en fonction de critères particuliers tels que la limitation des accélérations transversales ou la longueur de parcours.

## Revendications

1. Procédé de détermination en temps réel de la trajectoire cible globale d'un véhicule automobile (1) se déplaçant sur une voie de circulation (3) présentant une largeur (D) supérieure à (L) dudit véhicule, dans lequel on évalue de façon continue la courbure (C) de la voie de circulation, en au moins un point situé à l'avant du véhicule, **caractérisé en ce que** :
- on détermine la courbure du secteur se présentant devant le véhicule, et on décompose la courbure globale de la voie en une pluralité de virages élémentaires ;
- pour chaque virage élémentaire on détermine une évolution d'un écart élémentaire (ye) entre la trajectoire cible et le centre (6) de la voie de circulation, en fonction de la courbure au point considéré ;
- on somme continûment les évolutions des écarts élémentaires (ye) pour déterminer la trajectoire cible globale (7).

2. Procédé selon la revendication 1, **caractérisé en ce qu'**en un point donné de la voie de circulation présentant une courbure orientée d'un coté de la voie, l'évolution de l'écart élémentaire (yₑ) de la trajectoire se décompose en trois phases, pendant laquelle la trajectoire est située, par rapport au centre de la voie de circulation:
- dans une phase (P₁) antérieure au passage dudit point, du coté opposé au sens de la courbure;
- dans une phase (P₂) centrée sur le passage dudit point, du coté de la courbure;
- dans une phase (P₃) postérieure au passage dudit point, du coté opposé au sens de la courbure.

3. Procédé selon la revendication 1, **caractérisé en ce que** l'évaluation de la courbure de la voie de circulation est effectuée par l'analyse d'une image du champ de vision d'une caméra orientée vers l'avant du véhicule.

4. Procédé selon la revendication 1, **caractérisé en ce que** l'évaluation de la courbure de la voie de circulation est effectuée par calcul sur des données cartographiques relatives à la voie de circulation.

5. Procédé selon la revendication 1, **caractérisé en ce que** l'évaluation de la courbure de la voie de circulation est effectuée par analyse de repères liés à la voie de circulation, et notamment les marquages au sol

6. Procédé selon la revendication 1, **caractérisé en ce que** l'évaluation de la courbure de la voie de circulation est effectuée par échange d'informations avec des dispositifs appartenant à l'infrastructure routière.

## Claims

1. Method of determining in real time the overall target path of a motor vehicle (1) moving along a traffic lane (3) having a width (D) greater than that (L) of said vehicle, in which the curvature (C) of the traffic lane at at least one point located in front of the vehicle is continuously evaluated, **characterized in that**:
- the curvature of the sector lying in front of the vehicle is determined and the overall curvature of the lane is divided into a plurality of elementary bends;
- for each elementary bend, a variation in the elementary deviation (yₑ) between the target path and the centre (6) of the traffic lane as a function of the curvature at the point in question is determined; and
- the variations in the elementary deviations (yₑ) are continuously summed in order to determine the overall target path (7).

2. Method according to Claim 1, **characterized in that**, at a given point on the traffic lane having a curvature directed towards one side of the lane, the variation in the elementary deviation (yₑ) of the path is divided into three phases, during which the path is located, relative to the centre of the traffic lane:
- in a phase (P₁) prior to the passing of said point, on the opposite side from the direction of the curvature;
- in a phase (P₂) centred on the passing of said point, on the same side as the curvature; and
- in a phase (P₃) after the passing of said point, on the opposite side from the direction of the curvature.

3. Method according to Claim 1, **characterized in that** the curvature of the traffic lane is evaluated by analyzing an image of the field of view of a camera directed towards the front of the vehicle.

4. Method according to Claim 1, **characterized in that** the curvature of the traffic lane is evaluated by calculation on cartographic data relating to the traffic lane.

5. Method according to Claim 1, **characterized in that** the curvature of the traffic lane is evaluated by analysis of markers associated with the traffic lane, and especially markings on the ground.

6. Method according to Claim 1, **characterized in that** the curvature of the traffic lane is evaluated by exchange of information with devices belonging to the road infrastructure.

## Patentansprüche

1. Verfahren zur Echtzeit-Bestimmung der Gesamtzielbahn eines Kraftfahrzeugs (1), das sich auf einem Verkehrsweg (3) fortbewegt, der eine Breite (D) aufweist, die größer als diejenige (L) des Fahrzeugs ist, bei welchem auf kontinuierliche Weise die Krümmung (C) des Verkehrswegs an wenigstens einem sich vor dem Fahrzeug befindlichen Ort bewertet wird, **dadurch gekennzeichnet, dass**
- die Krümmung des sich vor dem Fahrzeug befindlichen Abschnitts bestimmt und die Gesamtkrümmung des Wegs in eine Vielzahl von Elementarkurven zerlegt wird;
- für jede Elementarkurve eine Entwicklung einer Elementarabweichung (ye) zwischen der Zielbahn und dem Zentrum (6) des Verkehrswegs als Funktion der Krümmung am betrachteten Ort bestimmt wird und
- die Entwicklungen der Elementarabweichungen (ye) kontinuierlich summiert werden, um die Gesamtzielbahn (7) zu bestimmen.

2. Verfahren nach Anspruch 1, **dadurch gekennzeichnet, dass** an einem gegebenen Ort des Verkehrswegs, der eine in eine Richtung einer Seite des Wegs ausgerichtete Krümmung aufweist, die Entwicklung der Elementarabweichung (yₑ) der Bahn in drei Phasen zerlegt ist, während derer sich die Bahn, bezogen auf das Zentrum des Verkehrswegs
- in einer vor dem Passieren des Ortes liegenden Phase (P₁) auf der der Krümmungsrichtung entgegengesetzten Seite,
- in einer auf das Passieren des Ortes zentrierten Phase (P₂) auf der Seite der Krümmung und
- in einer nach dem Passieren des Ortes liegenden Phase (P₃) auf der der Krümmungsrichtung entgegengesetzten Seite befindet.

3. Verfahren nach Anspruch 1, **dadurch gekennzeichnet, dass** die Bewertung der Krümmung des Verkehrswegs durch die Analyse eines Bildes vom Sichtfeld einer Kamera erfolgt, die vom Fahrzeug nach vorne ausgerichtet ist.

4. Verfahren nach Anspruch 1, **dadurch gekennzeichnet, dass** die Bewertung der Krümmung des Verkehrswegs durch Berechnung aufgrund kartographischer Daten bezüglich des Verkehrswegs erfolgt.

5. Verfahren nach Anspruch 1, **dadurch gekennzeichnet, dass** die Bewertung der Krümmung des Verkehrswegs durch die Analyse von mit dem Verkehrsweg verbundenen Markierungen und insbesondere der Bodenmarkierungen erfolgt.

6. Verfahren nach Anspruch 1, **dadurch gekennzeichnet, dass** die Bewertung der Krümmung des Verkehrswegs durch Informationsaustausch mit den zur Straßeninfrastruktur gehörenden Vorrichtungen erfolgt.
